# EUROPÄISCHE PATENTSCHRIFT

(11) **EP 1 800 457 B1**
(45) Veröffentlichungstag und Bekanntmachung des Hinweises auf die Patenterteilung: **16.07.2008**
(21) Anmeldenummer: 05775937.5
(22) Anmeldetag: 12.08.2005
(51) Int. Cl.: H04L 29/08

(54) **VERFAHREN ZUR BESTIMMUNG EINES LEITENDEN TEILNEHMERS IN EINEM NETZWERK**
METHOD FOR DETERMINING A LEADING SUBSCRIBER IN A NETWORK
PROCEDE DE DETERMINATION D'UN ABONNE CONDUCTEUR DANS UN RESEAU

(30) Priorität: 27.09.2004 DE 102004046858
(43) Veröffentlichungstag der Anmeldung: 27.06.2007
(73) Patentinhaber: Siemens Enterprise Communications GmbH & Co. KG, 81379 München (DE)
(72) Erfinder: ASCHAUER, Rudolf, A-1020 Wien (AT); PLONINGER, Christian, A-1210 Wien (AT); DORN, Christoph, A-1090 Wien (AT)
(86) Internationale Anmeldenummer: PCT/EP2005/053982
(87) Internationale Veröffentlichungsnummer: WO 2006/034917

(56) Entgegenhaltungen:
- US-A1- 2003 041 138
- US-B1- 6 363 416

## Beschreibung

Die Erfindung betrifft ein Verfahren zur Bestimmung eines leitenden Teilnehmers bzw. "Leader" in einem aus einer unbestimmten Anzahl von Netzelementen bestehenden Netzwerk.

Im Stand der Technik sind Netzwerke mit gleichgestellten Netzelementen, so genannte Peer-to-Peer-Netzwerke bekannt. Peer-to-Peer-Netzwerke bieten allen verbundenen Netzelementen - oftmals auch »Peer« bzw. »Client« genannt - eine gleichberechtigte Zusammenarbeit. Das bedeutet, dass jedes Netzelement anderen Netzelementen Funktionen und Dienstleistungen anbieten und andererseits von anderen Systemen angebotene Funktionen und Dienstleitungen nutzen kann, ohne dass ein zentraler Dienstgeber bzw. »Server« eingesetzt wird.

Peer-to-Peer-Netzwerke haben eine starke Verbreitung durch Dateitauschplattformen bzw. "File Sharing Systems" wie z.B. Gnutella, Napster, Kazaa erfahren. Diese Dateitauschplattformen haben einen gemeinsamen Zweck, dass die verbundenen Netzelemente untereinander Daten austauschen können, unterscheiden sich aber bezüglich ihrer Organisationsform. Während bei Napster ein vorbehaltenes Netzelement ein zentrales Verzeichnis (Centralized Directory) der im Netz aktuell teilnehmenden Netzelemente bzw. deren zum Tausch angebotenen Dateien vorgesehen war, ist bei Gnutella eine derartige Rolle eines ein zentrales Verzeichnis vorhaltendes Netzelements nicht vorgesehen. Stattdessen werden Suchanfragen bzw. "Queries" über das ganze Netzwerk, in Form einer "Multicast"-Anfrage, verteilt. Die Vorteile einer dezentralen Ausgestaltung bestehen darin, dass jedes Netzelement eine gleiche Rolle innehat und kein Netzelement ein Verzeichnis vorhalten muss. Dem gegenüber steht der Nachteile eines ausgeprägten Verkehrsaufkommen an Suchanfragenachrichten, welches mit einer wachsenden Anzahl an Teilnehmern überproportional ansteigt. Dieser Nachteil wird daher oft unter dem Begriff "Skalierungsproblem" angesprochen.

Aufgrund der erwähnten Nachteile ist es in vielen Fällen technisch vorteilhaft, aus einer Menge von über ein Netzwerk verbundenen Netzelemente ein Netzelement auszuwählen, welcher eine leitende Rolle einnimmt und daher als "Leader" bzw. leitender Teilnehmer bezeichnet wird.

Aus der US-Amerikanischen Druckschrift US 6.192.397 B1 ist ein Verfahren bekannt, bei der zwei Teilnehmer jeweils eine zufällige Zahl bestimmen und diese an andere Teilnehmer senden. Der Teilnehmer mit der größeren Zahl wird anschließend als leitender Teilnehmer vermerkt. Das Verfahren scheitert im Falle einer zufälligen Gleichheit der bestimmten Zahlen.

Aufgabe der Erfindung ist es, ein verbessertes Verfahren anzugeben, mit dem in einem Netzwerk, bestehend aus einer Mehrzahl von Netzelementen mit anfänglich gleichen Privilegien und Aufgaben genau ein leitender Teilnehmer ausgewählt wird.

Eine Lösung der Aufgabe erfolgt durch ein Verfahren mit den Merkmalen des Patentanspruchs 1.

Das erfindungsgemäße Verfahren wird aus einer Perspektive eines Netzelements beschrieben, das aus einem beliebigen, im weiteren noch zu erläuternden Grund, eine aktive Rolle dahingehend einnimmt, dass durch dieses Netzelement das Verfahren mit dem Senden einer an alle übrigen Netzelemente im Netzwerk gerichtete Anforderungsnachricht zur Bestimmung eines leitenden Teilnehmers ausgelöst wird. Im übrigen gilt das erfindungsgemäße Verfahren angesichts der anfänglich gleichen Privilegien und Aufgaben der beteiligten Netzelemente für alle Netzelemente in gleicher Weise, so dass das aus der Perspektive des betrachteten Netzelements beschriebene Verfahren keine Einschränkung hinsichtlich dem Charakter oder der Auswahl dieses betrachteten Netzelements darstellt. Die an alle übrigen Netzelemente gesendete Anforderungsnachricht wird z.B. als so genannte Multicast- oder Broadcast-Nachricht gesendet und enthält eine Sequenzzahl. Diese Sequenzzahl, bzw. - in Vorgriff auf eine während einer Ausgestaltung des erfindungsgemäßen Verfahrens zu verwendete zweite Sequenzzahl - erste Sequenzzahl wird aus einem ersten Zahlenbereich, beispielsweise - in einer sehr einfach Implementierung - aus einem Bereich von 1 bis 16384, zufällig ausgewählt. Eine zufällige Auswahl bzw. quasi-zufällige Auswahl erfolgt dabei mit bekannten technischen Verfahren auch auf jedem einzelnen Netzelement, das die Anforderungsnachricht empfangen hat und innerhalb einer vorgegebenen Zeitspanne eine ähnlich gestaltete Anforderungsnachricht an alle Netzelemente sendet. Jede dieser auf die durch das betrachtete Netzelement gesendeten Anforderungsnachricht in Antwort gesendeten Anforderungsnachrichten enthält seinerseits eine zufällig ausgewählte Sequenznummer, ist also mit dieser Sequenznummer "markiert" bzw. "labeled". Nachdem am betrachteten Netzelement - wie auch an den übrigen Netzelementen - die Anforderungsnachrichten der übrigen Netzelemente innerhalb einer vorgegebenen, d.h. am Netzelement einstellbaren Zeitspanne bzw. "Timeout" eingetroffen sind, werden die darin übermittelten Sequenzzahlen mit der zuvor mit der ursprünglichen Anforderungsnachricht gesendeten Sequenzzahl verglichen. Für den Fall, dass die eigene Sequenznummer im Vergleich mit einer der empfangenen Sequenznummern einen numerisch niedrigeren Wert besitzt, ist für das betrachtete Netzelement eine weitere Teilnahme am Verfahren beendet, was bedeutet, dass das betrachtete Netzelement am weiteren Verfahren zur Bestimmung eines leitenden Teilnehmers nicht weiter partizipiert, bezüglich seines Verhaltens bei ausgetauschten Nachrichten also zukünftig weiterhin die Rolle eines Netzelements spielt. Für den Fall, dass die eigene Sequenznummer im Vergleich mit allen empfangenen Sequenznummern den numerisch höchsten Wert besitzt, wird das betrachtete Netzelement netzelement-intern als der leitende Teilnehmer vermerkt. Damit ist der grundlegende Auswahlprozess beendet und kann mit optionalen weiteren Ausgestaltungen der Erfindung auch den übrigen Netzelementen mitgeteilt werden.

Im Anschluss erfolgt zwischen den antwortenden Netzelementen eine weitere Wahl eines leitenden Teilnehmers. Dabei wird zur ersten Sequenznummer eine zweite Sequenznummer addiert und an die noch am Verfahren teilnehmenden Netzelemente übersandt. Die noch teilnehmenden Netzelemente sind dabei die Netzelemente, welche auf die erste Anforderungsnachricht geantwortet haben.

Das erfindungsgemäße Verfahrens hat den Vorteil, dass einerseits der eher seltene Fall auftreten kann, dass zwei Netzelemente eine identische Sequenzzahl zufällig ausgewählt haben - eine Wahrscheinlichkeit, die mit einem zunehmenden ersten Zahlenbereich immer geringer wird - und mit der erneuten Wahl damit die zuverlässige Auswahl genau eines leitenden Teilnehmers gewährleistet wird. Andererseits kann auch der Fall eintreten, dass im Zuge des ersten Auswahlverfahrens die in Antwort gesendeten Anfragenachrichten nicht am betrachteten Netzelement eintrafen. Für den Fall, dass diese Anfragenachrichten eine höhere Sequenznummer enthielten, hätte das sendende Netzelement sich selbst als leitenden Teilnehmer vermerkt, die Information über das Vorliegen einer höheren Sequenznummer wäre jedoch am betrachteten Netzelement gar nicht eingetroffen, dass sich dieses - gemäß des ersten Auswahlverfahrens - somit seinerseits als leitenden Teilnehmer betrachtet und als solcher vermerkt hätte. Das zweite Auswahlverfahren dient also in vorteilhafter Weise einer Steigerung der Zuverlässigkeit im angestrebten Prozess, der mit der Wahl genau eines leitenden Teilnehmers endet.

Ein wesentlicher Vorteil des erfindungsgemäßen Verfahrens ist darin zu sehen, dass das beschriebene Verfahren gänzlich ohne Informationen über andere Netzelemente eingesetzt werden kann. Dieser Vorteil kommt insbesondere bei einer anfänglichen Initialisierung bzw. "Bootstrapping" des Netzwerks zum Tragen.

Das erfindungsgemäße Verfahren ist in vorteilhafter Weise sowohl zur Initialisierung des Netzwerks als auch zur flexiblen Anpassung des Netzwerks auf veränderte Gegebenheiten einsetzbar. Insbesondere ist das Verfahren also für so genannte Adhoc-Netzwerke einsetzbar, welche situationsbedingt aus einer lokalen Ansammlung mehrerer Netzelemente gebildet werden und deren lokale Verteilung und Zusammensetzung durch außer Betrieb gehende bzw. neu hinzugekommene Netzelemente ständigen Veränderungen unterworfen ist.

In vorteilhafter Weise wird durch das erfindungsgemäße Verfahren genau eines leitenden Teilnehmers in einem durch ein Broadcast-Segement gebildeten Netzwerk gewährleistet.

Vorteilhafte Weiterbildungen der Erfindung sind in den Unteransprüchen angegeben.

In einer vorteilhaften Ausgestaltung der Erfindung teilt der nach einem Auswahlprozess verbleibende leitende Teilnehmer seine Eigenschaft als leitender Teilnehmer mit, damit die übrigen Netzelemente dessen Eigenschaft als leitender Teilnehmer nicht durch individuelle Anfragen ermitteln müssen.

Zur Bestimmung der zweiten Sequenznummer werden zwei Ausgestaltungsvarianten vorgeschlagen. Mit einer zum ersten Auswahlverfahren analogen zufälligen Bestimmung aus einem zweiten Wertebereich, welcher aus Eindeutigkeitsgründen vorzugsweise kleiner als der erste Wertebereich gewählt wird, wird aufgrund eines mit der Bestimmung der ersten Sequenznummer gleichgearteten Vorgehens eine einfache Implementierung zur Bestimmung der zweiten Sequenznummer gewährleistet. Mit einem zweiten vorteilhaften Auswahlverfahren wird die aus dem zweiten Zahlenbereich entnommene zweite Sequenznummer je nach bestimmten physikalischen Parametern des Netzelements (d.h. der eigenen Systemleistung und/oder der verfügbaren Bandbreite und/oder der eigenen Rechenkapazität) ausgewählt, womit leistungsstärkeren Netzelementen in vorteilhafter Weise eine höhere Wahrscheinlichkeit, leitender Teilnehmer zu werden, eingeräumt wird.

In einer weiteren vorteilhaften Ausgestaltung der Erfindung, geht dem Verfahren zur Bestimmung des leitenden Teilnehmers ein Verfahren voraus, das einer Ermittlung dient, ob ein leitender Teilnehmer im Netzwerk vorhanden ist. Hierbei wird im Wesentlichen eine Anfragenachricht in Form einer Multicast- bzw. Broadcast-Nachricht an alle Netzelemente versandt. Falls innerhalb einer vorgegebenen Zeitspanne bzw. "Timeout" eine Bestätigungsnachricht genau eines leitenden Teilnehmers eintrifft, wird das Verfahren beendet.

Falls keine Bestätigungsnachricht eintrifft oder aber falls mehrere Bestätigungsnachrichten eintreffen, ist zur Gewährleistung eines einzigen leitenden Teilnehmers im Netzwerk eine Veranlassung des erfindungsgemäßen Verfahrens zur Bestimmung eines leitenden Teilnehmers geboten. Der letztgenannte Fall mehrerer Bestätigungsnachrichten tritt dann ein, wenn mehrere leitende Teilnehmer ("Multiple Leader") im Netzwerk vorhanden sind. Dies kann zum Beispiel dann auftreten, wenn ein bestehender leitender Teilnehmer eines ersten Ad-hoc-Netzwerkes durch die diesem Netzwerktyp innewohnende Dynamik in den Multicastbereich eines zweiten Netzwerkes eintritt, in dem schon ein ausgewählter leitender Teilnehmer existiert. Alternativ zur Anstoßung des erfindungsgemäßen Verfahrens mit dem Ziel, einen einzigen leitenden Teilnehmer auszuwählen, ist auch eine alternative. Ausgestaltung von Vorteil, bei dem die mit den Bestätigungsnachrichten zwischen der Mehrzahl von leitenden Teilnehmern ausgetauschten Sequenznummern miteinander verglichen werden und der leitende Teilnehmer mit der höheren Sequenznummer obsiegt. Dabei werden vorteilhaft die jeweiligen gespeicherten Sequenznummern verwendet, durch die der jeweilige leitende Teilnehmer durch das erfindungsgemäße Verfahren zum leitenden Teilnehmer wurde.

Ein Ausführungsbeispiel mit weiteren Vorteilen und Ausgestaltungen der Erfindung wird im folgenden anhand der Zeichnung näher erläutert.

Dabei zeigen:
- Fig. 1A - AD:: ein Strukturbild zur Darstellung einzelner Verfahrensschritte in einem aus mehreren Netzelementen gebildeten Netzwerk; und
- Fig. 2:: ein Struktogramm zur schematischen Darstellung eines möglichen Ablaufs zur Wahl eines leitenden Teilnehmers auf Basis des erfindungsgemäßen Verfahrens.

In den Ausführungsbeispielen des erfindungsgemäßen Verfahrens wird ein drahtloses Ad-hoc-Netzwerk mit mobilen Netzelementen, also beispielsweise Laptops betrachtet. Ein Ad-hoc-Netzwerk ist beispielsweise ein kabelloses Netzwerk, das ohne Router eingerichtet wurde. Die mobilen Netzwerkkomponenten, die miteinander - beispielsweise unter Anwendung des Kommunikationsprotokolls WLAN, d.h. Wireless Local Area Network - kommunizieren, richten das Netzwerk direkt bei Bedarf, d.h. ad-hoc ein. Weiterhin bedeutet die ad-hoc-Eigenschaft des Netzwerks, dass die daran teilnehmenden einzelnen Netzelemente a priori keinerlei Wissen über die anderen Netzelemente besitzen. Schließlich ist die ein ad-hoc-Netzwerk nicht an eine stabile Teilnehmermenge gebunden, neu hinzukommende oder die Kommunikation beendende Netzelemente haben also keinen Einfluss auf den Bestand des Netzwerks. Wenngleich das erfindungsgemäße Verfahren für die beschriebenen Netzwerkarten besonders geeignet ist, ist dieses nicht auf sie beschränkt sondern für alle bekannten LAN-Varianten einsetzbar.

Grundsätzlich ist ein Verfahren zur Bestimmung eines leitenden Teilnehmers erforderlich, um in einem Netzwerk eine der folgenden beiden Zustände zu erreichen:
- Es liegt ein leitender Teilnehmer vor
- Es soll nicht mehr als einen leitenden Teilnehmer geben In mobilen Peer-to-Peer Ad-hoc-Netzwerken gelten diese Forderungen in gleicher Weise, jedoch treten weitere Einschränkungen und Faktoren wie Mobilität, die Wahrscheinlichkeit eines Netzelementausfalls und limitierte Übertragungsbandbreiten hinzu, welche eine Erreichung der vorgenannten Bedingungen beeinflussen. Die resultierenden Hauptunterschiede zwischen einem Ad-hoc-Netzwerk und einem drahtgebundenen Netzwerk werden im Folgenden kurz angesprochen.

Für drahtgebundene Netzwerke vorgesehene Techniken nehmen einen nicht antwortenden leitenden Teilnehmer als ausgefallen an. Weiterhin benötigen die meisten Verfahren zur Auswahl eines leitenden Teilnehmers weitere Informationen aller Netzelemente bzw. Daten über die Netzwerktopologie, um für den Ausfall eines leitenden Teilnehmers stabile Verhältnisse anzunehmen.

Weiterhin können bei drahtgebundenen Netzwerken multible leitende Teilnehmer nur dann auftreten, wenn, z.B. verursacht durch einen vorausgegangenen Verbindungsfehler, mehrere Netzwerksegmente miteinander verschmelzen. In drahtlosen Netzwerken dagegen kann die Ursache eines Nichtantwortens durch einen leitenden Teilnehmer darin liegen, da er sich zu weit außerhalb der Reichweite des Netzwerks befindet oder das Netzwerk sich aus seiner Reichweite entfernt hat. Darüber hinaus kann der Fall eintreten, dass ein betrachtetes Netzelement nicht alle weiteren betrachteten Netzelemente kennt, dass vorwiegend durch einen dynamischen Wechsel in der Teilnahme einzelner Netzelemente begründet ist. Eine Teilnahme am Netzwerk erfolgt dynamisch, indem Netzelemente teilnehmen oder das Netzwerk zu unvorhersagbaren Zeitpunkten verlassen. Diese Umstände erschweren die Wahl eines leitenden Teilnehmers bzw. Leader. Dieser Umstand kompliziert das zu wählende Verfahren zur Auswahl eines leitenden Teilnehmers, da die Topologie des Netzwerkes während des Auswahlverfahrens Änderungen unterliegen kann. Schließlich können multible leitende Teilnehmer sehr einfach dadurch entstehen, dass ein leitender Teilnehmer in die Nähe eines anderen leitenden Teilnehmers bewegt wird.

Das Netzwerk des vorliegenden Ausführungsbeispiels weist folgende Eigenschaften auf:
- Selbstkonfigurierend, d.h. keine zentrale Stelle bzw. Third Party wird zur Koordinierung einer Aufstellung und Einordnung einzelner Netzelemente verwendet.
- Voll verteilt (Fully Distributed), d.h. allen Netzelementen wird eine einheitliche Logik zur Erfüllung der jeweiligen Aufgaben und zur Auswahl eines leitenden Teilnehmers zur Verfügung gestellt.
- Skalierbar, weil ein Datenaustausch wird innerhalb lokaler Bereiche vollzogen wird, im vorliegenden Ausführungsbeispiel also innerhalb der sogenannten Broadcast- bzw. Multicast Domain.
- Asynchron, d.h. die Abarbeitung und Koordinierung von Operationen durch die Netzelemente benötigt keine Synchronisierung in Form eines zentralen Taktes.

Das erfindungsgemäße Verfahren gewährleistet die Auswahl exakt eines Teilnehmers in einem Broadcast-Segment. In diesem Broadcast-Segment bzw. Netzwerk liegen während der Ausführung des erfindungsgemäßen Verfahrens drei verschiedene Zustände vor:
- Zustand 1: Es gibt keinen leitenden Teilnehmer, z.B. weil der vormalige leitende Teilnehmer das Netzwerk verlassen hat oder weil aktuell keine kommunizierenden Netzelemente im Netzwerk vorliegen
- Zustand 2: Es gibt genau einen leitenden Teilnehmer aufgrund einer erfolgreichen Beendigung des erfindungsgemäßen Verfahrens
- Zustand 3: Es gibt mehr als einen leitenden Teilnehmer, z.B. weil ein leitender Teilnehmer von einem anderen Netzwerk in das aktuelle Netzwerk eingetreten ist

Ein betrachtetes Netzelement kann zwischen zwei Zuständen unterscheiden, nämlich dass es Kenntnis von genau einem leitenden Teilnehmer hat oder dass kein leitender Teilnehmer vorliegt. Im letzten Fall wird das betrachtete Netzelement das erfindungsgemäße Verfahren einleiten.

Eine Ausgestaltung des erfindungsgemäßen Verfahrens besteht aus drei Schritten, welche nacheinander abgearbeitet werden, wobei der jeweils folgende Schritt nur dann ausgeführt wird, wenn der vorhergehende keine Ergebnisse bezüglich des Erhalts einer Adresse des leitenden Teilnehmers gezeitigt hat. Die gesamte Kommunikation zwischen den Netzelementen erfolgt über "Multicast"-Pakete. Diese Maßnahme hat den Vorteil, dass eine betrachtete Gruppe von Netzelementen sowohl für Präsenzinformationsnachrichten als auch für Nachrichten zur Auswahl eines leitenden Teilnehmers erreichbar ist.

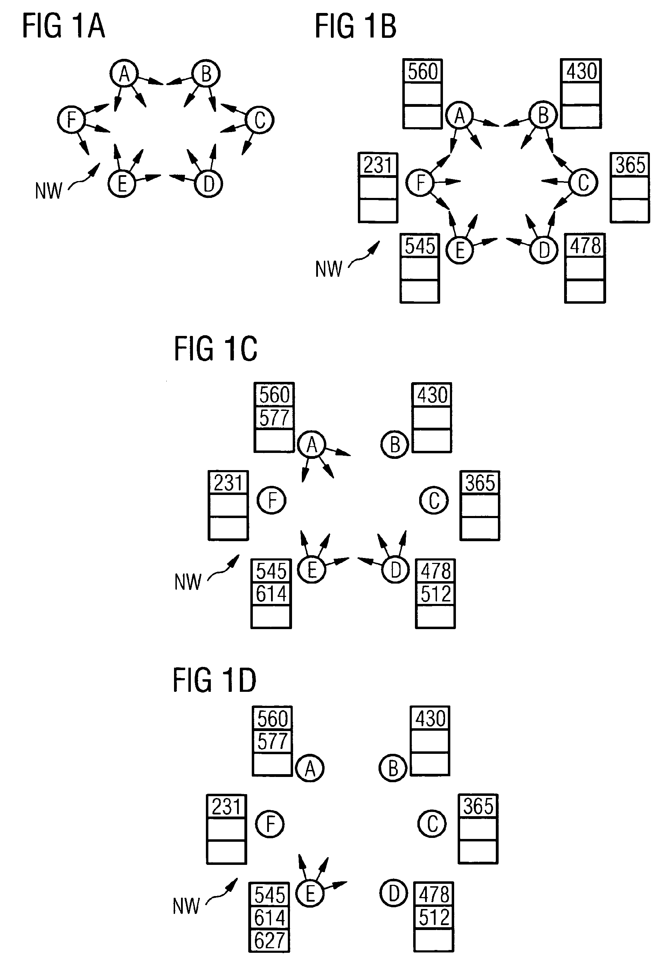

Die FIG 1A bis FIG 1D zeigen unterschiedliche Stadien eines exemplarischen Auswahlvorgangs für einen leitenden Teilnehmer mit einem aus sechs Netzelementen A,B,C,D,E,F bestehendes Netzwerk NW.

In einem ersten Schritt - vgl. FIG 1A - stellt jedes Netzelement A,B,C,D,E,F sicher, dass kein leitender Teilnehmer bereits ausgewählt wurde seit dem letzten Ausfall des bisherigen leitenden Teilnehmers.

Diese Sicherstellung erfolgt durch eine Folge von Anfragenachrichten, welche in bestimmten Zeitabständen gesendet werden. Im vorliegenden Ausführungsbeispiel erfolgt ein Multicast-Aussenden von drei Anfragenachrichten, welche auch als "WhoIsServer"-Nachrichten bezeichnet werden. Ein mehrmaliges Senden dieser Anfragenachrichten erfolgt im Hinblick auf eine Nichtgarantierbarkeit des Eintreffens bei jedem abhörenden Netzelement. Erhält ein eine Anfragenachricht sendendes Netzelement A eine Bestätigungsnachricht in Form einer "IamServer"-Nachricht innerhalb einer vorgegebenen Zeitspanne, akzeptiert dieses Netzelement A das bestätigende Netzelement als den aktuellen leitenden Teilnehmer und beendet lokal, d.h. für den betrachteten Netzknoten A, das Verfahren zur Auswahl eines leitenden Teilnehmers. In der Beschreibung des Ausführungsbeispiel wird jedoch angenommen, dass kein leitender Teilnehmer im Netzwerk NW vorliegt.

Im Folgenden wird auf FIG 1B Bezug genommen. Falls innerhalb einer vorgegebenen Zeitspanne keine Bestätigungsnachricht eintrifft, werden vom betrachteten Netzelement A Anforderungsnachrichten bzw. "RequestForServer"-Nachrichten als Multicast-Nachricht an alle Netzelemente B,C,D,E,F im Netzwerk NW gesandt, wobei die Anforderungsnachricht mit einer aus einem ersten Zahlenbereich zufällig entnommenen ersten Sequenzzahl markiert ist.

Die vom betrachteten Netzelement A zufällig ermittelte erste Sequenzzahl sei im vorliegenden Fall 560, die eines zweiten Netzelements B sei 430, die eines dritten Netzelements C sei 365 usw. Die jeweiligen ersten Sequenzzahlen der übrigen Netzelemente D,E,F sind der Zeichnung zu entnehmen.

Die übrigen Netzelemente B,C,D,E,F senden ebenfalls Anforderungsnachrichten aus, die ebenfalls mit Ihrer jeweils ermittelten ersten Sequenzzahl markiert sind.

Sobald ein Netzelement eine mit einer - bezüglich der eigenen ermittelten Sequenzzahl - höheren Sequenzzahl markierten Anforderungsnachricht in Empfang genommen hat, beendet dieses ein Senden weiterer Anforderungsnachrichten und wartet auf eine Bestätigungsnachricht vom Typ "IamServer". Dies gilt sowohl für die erste Sequenzzahl als auch für das weitere Verfahren mit höheren Sequenzzahlen gemäß der folgenden FIG 1C usw.

Im Folgenden wird auf FIG 1C Bezug genommen. In einer zweiten "Runde" des Auswahlprozesses wird vom jeweiligen noch am Auswahlverfahren teilnehmenden Netzelement eine zweite Anforderungsnachricht ausgesandt.

Im vorliegenden Fall nehmen gemäß der selbsterklärenden FIG 1C das betrachtete Netzelement A sowie die Netzelemente D und E mit den ersten Sequenzzahlen 478 bzw. 545 teil, obwohl deren Sequenzzahl niedriger als die des betrachteten Netzelements A ist und diese demgemäß eigentlich ein weiteres Senden von Anforderungsnachrichten einstellen müssten. Im Ausführungsbeispiel wird jedoch angenommen, dass die Netzelemente D und E die Anforderungsnachricht des betrachteten Netzelements A und zusätzlich das Netzelement D die Anforderungsnachricht von E nicht erhalten haben, wodurch diese sich als das Netzelement mit der höchsten Sequenznummer wähnen. Die übrigen Netzelemente B,C haben zumindest eine Anforderungsnachricht mit höherer Sequenznummer erhalten, und daher Ihre Teilnahme eingestellt.

In einem zweiten Auswahlvorgang werden nun zweite Anforderungsnachrichten generiert. Die jeweilige zweite jeweilige Anforderungsnachricht ist mit einer zweiten Sequenzzahl markiert, die aus einer Addition zwischen der ersten Sequenzzahl und einer aus einem zweiten Zahlenbereich zufällig entnommenen Sequenzzahl besteht. Beispielsweise - vgl. FIG 1C - hat das betrachtete Netzelement A eine zweite Sequenzzahl 577 ermittelt, die sich aus der Addition der ersten Sequenzzahl 560 mit einer - nicht dargestellten - Zufallszahl 17 ergibt.

Die jeweilige zweite Anforderungsnachricht wird zwischen den noch am Auswahlverfahren teilnehmenden Netzelementen A,D,E ausgetauscht.

Im Folgenden wird auf FIG 1D Bezug genommen. In einer dritten "Runde" des Auswahlprozesses wird von den noch am Auswahlverfahren teilnehmenden Netzelement E eine dritte Anforderungsnachricht ausgesandt, wobei die Wahl einer dritten Sequenzzahl mit dem Wert 627 in analoger Weise durch Addition der zweiten Sequenzzahl mit dem Wert 614 mit einer aus einem Zahlenbereich zufällig entnommenen Zahl mit dem - nicht dargestellten - Wert 13 gebildet wird. Nachdem auch nach dem Aussenden dieser dritten Anforderungsnachricht innerhalb einer vorgebbaren Zeitspanne keine weitere Anforderungsnachricht am Netzelement E eintrifft, schickt dieser eine oder mehrere Bestätigungsnachrichten vom Typ "IamServer" an alle übrigen Netzelemente A,B,C,D,F im Netzwerk NW, bei denen dieses Netzelement E nun als leitender Teilnehmer des Netzwerks NW vermerkt wird.

In diesem Beispiel wird ein Zyklus von drei Anforderungsnachrichten zur Auswahl des leitenden Teilnehmers gewählt, die Zahl der Zyklen ist im übrigen beliebig wählbar.

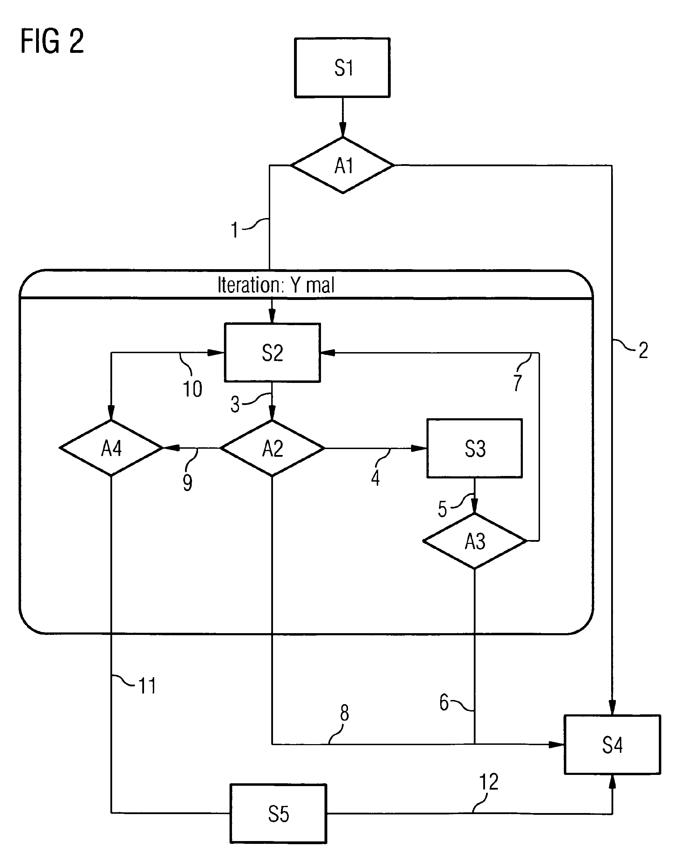

Fig. 2 zeigt ein Struktogramm eines Implementierungsbeispiels des erfindungsgemäßen Verfahrens.

In einem ersten Verfahrensschritt S1 erfolgt eine Übermittlung einer Anfragenachricht "WhoIsServer", welche als Multicast-Nachricht gesendet wird, durch ein betrachtetes Netzelement. Da ein Multicast nicht garantiert bei jedem potentiellen Empfänger bzw. Netzelement eintrifft, wird die Anfrage mehrmals wiederholt, z.B. zweimal. Die Anzahl der Wiederholungen liegt im übrigen im Ermessen des Implementierers.

Nach dem Senden der ersten Anfragenachricht wird eine bestimmte Zeitspanne auf eine Antwort gewartet, Verzweigungsschritt A1. Empfängt das betrachtete Netzelement innerhalb dieser Zeitspanne eine "IamServer" Antwort - Verfahrenszweig 2 - ist das Verfahren für das betrachtete Netzelement beendet, Verfahrensschritt S4.

Empfängt das betrachtete Netzelement innerhalb der Zeitspanne keine Antwort - Verfahrenszweig 1 - so beginnt die erste Iteration mit Verfahrensschritt S2.

In Verfahrensschritt S2 wird eine Anforderungsnachricht an alle übrigen Netzelemente gesendet. Nach dem Senden der Anforderungsnachricht - Verfahrenszweig 3 - wird eine bestimmte Zeitspanne auf Nachrichten anderer Netzelemente gewartet, Verzweigungsschritt A2.

Empfängt das betrachtete Netzelement innerhalb der Zeitspanne in Verzweigungsschritt A2 keine Anforderungsnachricht oder eine Anforderungsnachricht mit einer niedrigeren Sequenznummer als der eigenen - Verfahrenszweig 9 - wird Verzweigungsschritt A4 erreicht. Sind weitere Iterationen notwendig - Verfahrenszweig 10 - wird eine weitere Anforderungsnachricht versandt - Verfahrensschritt S2. Sind keine weiteren Iterationen vorgesehen - Verfahrenszweig 11 - sendet das betrachtete Netzelement eine oder mehrere (implementierungsabhängig) "IamServer" Nachrichten- Verfahrensschritt S5 - und beendet das Verfahren - Verfahrenszweig 12, Verfahrensschritt S4.

Empfängt das betrachtete Netzelement innerhalb der Zeitspanne in Verzweigungsschritt A2 eine "IamServer" Nachricht eines anderen Netzelementes beendet das betrachtete Netzelement das Verfahren - Verfahrenszweig 8, Verfahrensschritt S4.

Empfängt das betrachtete Netzelement innerhalb der Zeitspanne in Verzweigungsschritt A2 eine Anforderungsnachricht mit einer höheren Sequenznummer als der eigenen - Verfahrenszweig 4 - werden keine weiteren Anforderungsnachrichten durch das betrachtete Netzelement gesendet, Verfahrensschritt S3. Danach - Verzweigungsschritt 5 - wartet das betrachtete Netzelement auf eine Bestätigungsnachricht vom Typ "IamServer" durch ein anderes Netzelement, Verzweigungsschritt A3.

Empfängt das betrachtete Netzelement innerhalb einer definierten Zeitspanne in Verzweigungsschritt A3 eine Bestätigungsnachricht vom Typ "IamServer" - Verfahrenszweig 6 - so beendet das betrachtet Netzelement das Verfahren - Verfahrenszweig 6, Verfahrensschritt S4.
Empfängt das betrachtete Netzelement innerhalb einer definierten Zeitspanne in Verzweigungsschritt A3 keine Bestätigungsnachricht vom Typ "IamServer" - Verfahrenszweig 7 - so wird das Verfahren neu gestartet - Verfahrensschritt S2.

## Patentansprüche

1. Verfahren zur Bestimmung eines leitenden Teilnehmers in einem aus einer Mehrzahl von Netzelementen bestehenden Netzwerk mit anfänglich gleichen Privilegien und Aufgaben, umfassend folgende auf einem betrachteten Netzelement durchzuführende Schritte:
a) Senden einer an alle Netzelemente gerichtete Anforderungsnachricht, wobei die Anforderungsnachricht mit einer aus einem ersten Zahlenbereich zufällig entnommenen Sequenzzahl markiert ist,
b) Empfang von analog Schritt a) durch die übrigen Netzelementen innerhalb einer vorgegebenen Zeitspanne gesendeten Anforderungsnachrichten und Vergleich der darin übermittelten Sequenzzahl mit der gemäß Schritt a) übersandten eigenen Sequenzzahl;
b1) Für den Fall, dass die eigene Sequenzzahl im vergleich mit einer der empfangenen Sequenzzahlen den numerisch niedrigeren Wert besitzt, ist für das betrachtete Netzelement eine weitere Teilnahme am Verfahren beendet,
b2) Für den Fall, dass die eigene Sequenzzahl im vergleich mit allen empfangenen Sequenzzahlen den numerisch höchsten Wert besitzt, erfolgt ein Senden einer an die antwortenden Netzelemente gerichtete Anforderungsnachricht, wobei die Anforderungsnachricht mit einer zweiten Sequenzzahl markiert ist, die aus einer Addition der in Schritt a) bestimmten Sequenzzahl mit einer aus einem zweiten Zahlenbereich entnommenen Sequenzzahl ermittelt wird,
c) Empfang von analog Schritt b) durch die übrigen Netzelementen innerhalb einer vorgegebenen Zeitspanne gesendeten Anforderungsnachrichten und Vergleich der übermittelten zweiten Sequenzzahl mit der gemäß Schritt b) übersandten eigenen zweiten Sequenzzahl;
c1) Für den Fall, dass die eigene zweite Sequenzzahl im Vergleich mit einer der empfangenen zweiten Sequenzzahlen den numerisch niedrigeren Wert besitzt, ist für das betrachtete Netzelement eine weitere Teilnahme am Verfahren beendet,
c2) Für den Fall, dass die eigene zweite Sequenzzahl im Vergleich mit allen empfangenen zweiten Sequenzzahlen den numerisch höchsten Wert besitzt, wird das betrachtete Netzelement als der leitende Teilnehmer vermerkt.

2. Verfahren nach Anspruch 1,
**dadurch gekennzeichnet,**
**dass** das als leitender Teilnehmer vermerkte Netzelement den übrigen Netzelementen in einer Nachricht seine Eigenschaft als leitender Teilnehmer innerhalb einer vorgegebenen Zeitspanne mitteilt.

3. Verfahren nach einem der vorgenannten Ansprüche,
**dadurch gekennzeichnet,**
**dass** der zweite Zahlenbereich kleiner ist als der erste Zahlenbereich:

4. Verfahren nach einem der vorgenannten Ansprüche,
**dadurch gekennzeichnet,**
**dass** die aus dem zweiten Zahlenbereich entnommene zweite Sequenzzahl zufällig aus dem zweiten Zahlenbereich ausgewählt wird.

5. Verfahren nach einem der vorgenannten Ansprüche,
**dadurch gekennzeichnet,**
**dass** die aus dem zweiten Zahlenbereich entnommene zweite Sequenzzahl bezüglich ihrer Höhe abhängig von einem oder mehreren der folgenden Kriterien der ausgewählt wird:
- der eigenen Systemleistung und/oder
- der verfügbaren Bandbreite und/oder
- der eigenen Rechenkapazität und/oder
- anderen physikalischen Parametern.

6. Verfahren nach einem der vorgenannten Ansprüche,
**dadurch gekennzeichnet,**
**dass** vor dem Verfahrensschritt a) eine Ermittlung erfolgt, ob genau ein leitender Teilnehmer im Netzwerk bestimmt ist.

7. Verfahren nach Anspruch 6,
**dadurch gekennzeichnet,**
**dass** zur Ermittlung, ob ein leitender Teilnehmer bestimmt ist, folgende auf einem betrachteten Netzelement durchzuführende Verfahrensschritte erfolgen:
α) Versenden einer Anfragenachricht zur Ermittlung eines leitenden Teilnehmers, gerichtet an alle im Netzwerk aktuell kommunizierenden Netzelemente;
β) Falls innerhalb einer vorgegebenen Zeitspanne eine Bestätigungsnachricht von genau einem leitenden Teilnehmer eintrifft, wird dieser leitende Teilnehmer lokal vermerkt und das Verfahren beendet;
γ) Falls innerhalb einer vorgegebenen Zeitspanne keine Bestätigungsnachricht von einem leitenden Teilnehmer eintrifft, wird das Verfahren gemäß Verfahrensschritt a) eingeleitet.

8. Verfahren nach Anspruch 7,
**dadurch gekennzeichnet,**
**dass** zur Ermittlung eines einzigen leitenden Teilnehmers folgender auf jedem betrachteten leitenden Teilnehmer durchzuführender Verfahrensschritte erfolgt:
δ) Falls innerhalb einer vorgegebenen Zeitspanne Bestätigungsnachrichten von mehreren leitenden Teilnehmer eintreffen, wird das Verfahren gemäß Verfahrensschritt a) eingeleitet.

9. Verfahren nach Anspruch 7,
**dadurch gekennzeichnet,**
**dass** zur Ermittlung eines einzigen leitenden Teilnehmers folgende auf jedem betrachteten leitenden Teilnehmer durchzuführende Verfahrensschritte erfolgen:
δ) Falls innerhalb einer vorgegebenen Zeitspanne Bestätigungsnachrichten von mehreren leitenden Teilnehmer eintreffen, erfolgt zwischen den mehreren leitenden Teilnehmern ein Vergleich von mit den Bestätigungsnachrichten übermittelten Sequenzzahlen;
δ1) Für den Fall, dass in einem betrachteten leitenden Teilnehmer die eigene Sequenzzahl im Vergleich mit allen empfangenen Sequenzzahlen den numerisch niedrigsten Wert besitzt, wird dieser betrachtete leitende Teilnehmer als Netzelement vermerkt und für dieses Netzelement eine weitere Teilnahme am Verfahren beendet.
δ2) Für den Fall, dass in einem betrachteten leitenden Teilnehmer die eigene Sequenzzahl im Vergleich mit allen empfangenen Sequenzzahlen den numerisch höchsten Wert besitzt, wird der betrachtete leitende Teilnehmer als leitender Teilnehmer vermerkt.

10. Verfahren nach einem der vorgenannten Ansprüche,
**dadurch gekennzeichnet,**
**dass** die jeweiligen vorgegebenen Zeitspannen am Netzelement einstellbar sind.

11. Verfahren nach einem der vorgenannten Ansprüche,
**dadurch gekennzeichnet,**
**dass** das Netzwerk ein Ad-Hoc-Netzwerk ist.

12. Verfahren nach einem der vorgenannten Ansprüche,
**dadurch gekennzeichnet,**
**dass** das Netzwerk gemäß der bekannten WLAN-Spezifikationen ausgestaltet ist.

## Claims

1. Method for determining a leading subscriber in a network consisting of a plurality of network elements which initially have identical privileges and tasks, comprising the following steps which are to be carried out on an observed network element:
a) sending a request message addressed to all network elements, said request message being labelled with a sequence number which is chosen at random from a first number range,
b) receiving request messages which were sent as per step a) by the other network elements within a predetermined period and comparing the sequence number contained therein with the local sequence number which was transmitted in step a),
b1) if the observed network element's own sequence number has the lower numerical value in comparison with one of the received sequence numbers, further participation in the method is terminated for said observed network element,
b2) if the observed network element's sequence number has the highest numerical value in comparison with all received sequence numbers, a request message addressed to the responding network elements is sent, said request message being labelled with a second sequence number which is determined from an addition of the sequence number specified in step a) and a sequence number which is taken from a second number range,
c) receiving request messages which were sent as per step b) by the other network elements within a predetermined period and comparing the transferred second sequence number with the observed network element's second sequence number which was transmitted in step b),
c1) if the observed network element's second sequence number has the lower numerical value in comparison with one of the received second sequence numbers, further participation in the method is terminated for said observed network element,
c2) if the observed network element's second sequence number has the highest numerical value in comparison with all received second sequence numbers, said observed network element is registered as the leading subscriber.

2. Method according to claim 1,
**characterised in that**
the network element which is registered as the leading subscriber announces its attribute as leading subscriber to the other network elements in a message within a predetermined period.

3. Method according to one of the preceding claims,
**characterised in that**
the second number range is smaller than the first number range.

4. Method according to one of the preceding claims,
**characterised in that**
the second sequence number which is taken from the second number range is selected at random from the second number range.

5. Method according to one of the preceding claims,
**characterised in that**
in respect of its value, the second sequence number which is taken from the second number range is selected depending on one or more of the following criteria:
- the observed network element's system performance and/or
- the available bandwidth and/or
- the observed network element's computing capacity and/or
- other physical parameters.

6. Method according to one of the preceding claims,
**characterised in that**
prior to the method step a), it is ascertained whether precisely one leading subscriber has been determined in the network.

7. Method according to claim 6,
**characterised in that**
in order to ascertain whether a leading subscriber has been determined, the following method steps are carried out on an observed network element:
α) sending a query message for ascertaining a leading subscriber to all network elements currently communicating in the network,
β) if a confirmation message arrives from precisely one leading subscriber within a predetermined period, this leading subscriber is registered locally and the method is terminated,
γ) if no confirmation message arrives from a leading subscriber within a predetermined period, the method according to method step a) is initiated.

8. Method according to claim 7,
**characterised in that**
in order to ascertain a single leading subscriber, the following method step is carried out on each observed leading subscriber:
δ) if confirmation messages arrive from a plurality of leading subscribers within a predetermined period, the method according to method step a) is initiated.

9. Method according to claim 7,
**characterised in that**
in order to ascertain a single leading subscriber, the following method steps are carried out on each observed leading subscriber:
δ) if confirmation messages arrive from a plurality of leading subscribers within a predetermined period, a comparison of sequence numbers which were transferred with the confirmation messages is carried out among the plurality of leading subscribers,
δ1) if, in an observed leading subscriber, the observed leading subscriber's sequence number has the lowest numerical value in comparison with all received sequence numbers, said observed leading subscriber is registered as a network element and further participation in the method is terminated for this network element,
δ2) if, in an observed leading subscriber, the observed leading subscriber's sequence number has the highest numerical value in comparison with all received sequence numbers, said observed leading subscriber is registered as the leading subscriber.

10. Method according to one of the preceding claims,
**characterised in that**
the relevant predetermined periods can be set at the network element.

11. Method according to one of the preceding claims,
**characterised in that** the network is an ad hoc network.

12. Method according to one of the preceding claims,
**characterized in that**
the network is embodied in accordance with the known WLAN specifications.

## Revendications

1. Procédé pour déterminer un abonné directeur dans un réseau constitué d'une pluralité d'éléments de réseau avec des privilèges et fonctions identiques au début, comprenant les étapes suivantes à effectuer sur un élément de réseau considéré :
a) envoi d'un message de demande destiné à tous les éléments de réseau, le message de demande étant repéré avec un nombre de séquence prélevé de façon aléatoire dans une première plage de nombres,
b) réception de messages de demande envoyés de façon analogue à l'étape a) par les autres éléments de réseau dans un laps de temps prédéfini et comparaison du nombre de séquence transmis dedans avec le nombre de séquence propre transmis selon l'étape a) ;
b1) dans le cas où le nombre de séquence propre présente une valeur numériquement inférieure par rapport à un des nombres de séquence reçus, une nouvelle participation au procédé est terminée pour l'élément de réseau considéré,
b2) dans le cas où le nombre de séquence propre présente la valeur numériquement maximale par rapport à tous les nombres de séquence reçus, on a un envoi d'un message de demande destiné aux éléments de réseau répondant, le message de demande étant repéré avec un deuxième nombre de séquence qui est déterminé par une addition du nombre de séquence déterminé à l'étape a) et d'un nombre de séquence prélevé dans une seconde plage de nombres.
c) réception de messages de demande envoyés de façon analogue à l'étape b) par les autres éléments de réseau dans un laps de temps prédéfini et comparaison du second nombre de séquence envoyé avec le second nombre de séquence propre envoyé selon l'étape b).
c1) dans le cas où le second nombre de séquence propre présente une valeur numériquement inférieure par rapport à l'un des seconds nombres de séquence reçus, une nouvelle participation au procédé est terminée pour l'élément de réseau considéré,
c2) dans le cas où le second nombre de séquence propre présente la valeur numériquement maximale par rapport à tous les seconds nombres de séquence reçus, l'élément de réseau considéré est noté comme l'abonné directeur.

2. Procédé selon la revendication 1,
**caractérisé en ce que**
l'élément de réseau noté comme abonné directeur signale aux éléments de réseau restants dans un message sa qualité d'abonné directeur dans un laps de temps prédéfini.

3. Procédé selon l'une quelconque des revendications précédentes,
**caractérisé en ce que**
la seconde plage de nombre est plus petite à la première plage de nombre.

4. Procédé selon l'une quelconque des revendications précédentes,
**caractérisé en ce que**
le second nombre de séquence prélevé dans la deuxième plage de nombres est sélectionné de façon aléatoire dans la seconde plage de nombres.

5. Procédé selon l'une quelconque des revendications précédentes,
**caractérisé en ce que**
le second nombre de séquence prélevé dans la seconde plage de nombres est sélectionné en ce qui concerne son niveau en fonction d'un ou de plusieurs des critères suivants :
- la propre puissance du système et/ou
- la largeur de bande disponible et/ou
- la capacité de calcul propre et/ou
- d'autres paramètres physiques.

6. Procédé selon l'une quelconque des revendications précédentes,
**caractérisé en ce que**
avant l'étape de procédé a), on détermine si exactement un abonné directeur est déterminé dans le réseau.

7. Procédé selon la revendication 6,
**caractérisé en ce que**
pour déterminer si un abonné directeur est déterminé, on réalise les étapes de procédé suivantes à effectuer sur un élément de réseau considéré :
α) envoi d'un message de demande pour déterminer un abonné directeur, destiné à tous les éléments de réseau communiquant actuellement dans le réseau ;
β) si un message de confirmation provenant d'exactement un abonné directeur arrive dans un laps de temps prédéfini, cet abonné directeur est noté localement et le procédé est terminé ;
γ) si aucun message de confirmation provenant d'un abonné directeur n'arrive dans un laps de temps prédéfini, le procédé est mis en oeuvre selon l'étape de procédé a).

8. Procédé selon la revendication 7,
**caractérisé en ce que**,
pour déterminer un abonné directeur unique, on réalise l'étape de procédé suivante à effectuer sur chaque abonné directeur considéré :
δ) si des messages de confirmation de plusieurs abonnés directeurs arrivent dans un laps de temps prédéfini, le procédé est mis en oeuvre selon l'étape de procédé a).

9. Procédé selon la revendication 7,
**caractérisé en ce que**,
pour déterminer un abonné directeur unique, on réalise les étapes de procédé suivantes à effectuer sur chaque abonné directeur considéré :
δ) si des messages de confirmation provenant de plusieurs abonnés directeurs arrivent dans un laps de temps prédéfini, une comparaison de nombres de séquence transmis avec les messages de confirmation est effectuée entre les plusieurs abonnés directeurs
δ1) dans le cas où, dans un abonné directeur considéré, le numéro de séquence propre présente la valeur numériquement minimale par rapport à tous les nombres de séquence reçus, cet abonné directeur considéré est noté comme élément de réseau et une nouvelle participation au procédé est terminée pour cet élément de réseau.
δ2) dans le cas où, dans un abonné directeur considéré, le nombre de séquence propre présente la valeur numériquement maximale par rapport à tous les nombres de séquence reçus, l'abonné directeur considéré est noté comme abonné directeur.

10. Procédé selon l'une quelconque des revendications précédentes,
**caractérisé en ce que**
les laps de temps prédéfinis respectifs peuvent être réglés sur l'élément de réseau.

11. Procédé selon l'une quelconque des revendications précédentes,
**caractérisé en ce que**
le réseau est un réseau ad hoc.

12. Procédé selon l'une quelconque des revendications précédentes,
**caractérisé en ce que**
le réseau est conçu selon les spécifications WLAN connues.
